# EUROPEAN PATENT SPECIFICATION

(11) **EP 1 628 022 B1**
(45) Date of publication and mention of the grant of the patent: **10.12.2008**
(21) Application number: 05024309.6
(22) Date of filing: 31.07.2002
(51) Int. Cl.: F16B 37/06, F16B 27/00

(54) **Self-attaching fastener**
Selbstbefestigendes Befestigungselement
Elément de fixation auto-attachant

(30) Priority: 15.08.2001 US 312448 P
(43) Date of publication of application: 22.02.2006
(62) Divisional of application: 02765904.4
(73) Proprietor: Whitesell International Corporation, Taylor, MI 48180 (US)
(72) Inventor: Ladouceur, Harold A., Livonia, Michigan 48154 (US); Vrana, John J., Rochester Hills Michigan 48307 (US)
(74) Representative: Heselberger, Johannes

(56) References cited:
- US-A- 3 711 931
- US-A- 4 124 050
- US-A- 4 610 072
- US-A- 4 653 970
- US-A- 4 971 499
- US-A- 5 549 430
- US-A- 6 122 816

## Description

### FIELD OF THE INVENTION

This invention relates to fastener systems, particularly a self-attaching fastener according to the preamble of claim 1. Such a fastener is known from US Patent No. 5,549,430 A.

### BACKGROUND OF THE INVENTION

Self-attaching fastener systems developed by the predecessor in interest of the applicant (Multifastener Corporation) have been used for many years in mass production applications, including the automotive industry. Such fasteners generally include a central projecting pilot portion having a threaded or unthreaded bore therethrough and flange portions on opposed sides of the pilot portion. Universal™ pierce and clinch nuts commercially available from the assignee of this application include a groove extending into opposed sides of the projecting pilot portion adjacent the flange portions. When used as a clinch nut, the pilot portion is received through an opening in a panel and the panel is then received on panel supporting or engaging surfaces of the flange portions. The panel is then deformed by a die button into the grooves in the pilot portion, permanently attaching the fastener to the panel. When used as a pierce nut, the end of the pilot portion is used as a punch, piercing an opening in the panel, which receives the pilot portion as described.

In the Hi-Stress™ nut, also commercially available from the Assignee of the present application, the panel receiving grooves are located in the flange portions on opposed sides of the pilot portion. In the preferred embodiment of the Hi-Stress™ nut, the grooves are dovetail-shaped having a restricted opening at the panel receiving surface of the flange portions providing significantly improved pull-off strength. When used as a pierce nut, the pilot portion pierces an opening in the panel and the panel adjacent the opening is then deformed by a die member into the dovetail-shaped grooves and against the bottom wall of the grooves providing improved push-off strength. Both types of pierce and clinch nuts described above are generally installed in mass production applications by a die press. One platen of the die press includes an installation head which receives the pierce or clinch nuts and the opposed die platen includes a die button which deforms the metal into the grooves of the nut as described above. U.S. Patent No. 3,140,010, describes a method and apparatus for dispensing fasteners of the type described above which includes adhesively fixing the fasteners to a continuous web.

The prior patents describe a number of methods of preorienting fasteners in a carrier strip, including an integral frangible carrier portion or methods of attaching fasteners on a wire or plurality of wires. U.S. Patent No. 3,711,931, assigned to the predecessor in interest of the applicant, describes a method of forming a continuous strip of preoriented self-attaching fasteners including pierce and clinch nuts of the type described above, wherein wire grooves are formed on the back bearing surface of the nut opposite the pilot portion. The pierce or clinch nuts are then oriented in end to end relation with the wire grooves coaxially aligned and a frangible continuous wire is then inserted or rolled into the wire grooves and the back face of the fastener is deformed over the wires by a knurling tool. Self-attaching fasteners of the type described above are now supplied by the assignee of this application in bulk and strip form as disclosed in the above referenced U.S. Patent No. 3,711,931.

The self-attaching fasteners described above are fed to the installation head by a reciprocal pawl having a finger received in the threaded bore. In a typical installation, the installation head includes a chuck or feeder which, upon opening of the die press, feeds a nut into the plunger passage of the installation head, such that a nut is located in the "ready position" following each stroke of the press.

Self-attaching fasteners of the type described above are presently formed by a rolling process, starting with a continuous metal wire, wherein the desired cross-section of the fastener is first formed in a continuous strip of metal, which is then rolled into a coil. The coil is then fed through a punch, which punches or pierces the nut bore, and the strip is then fed to a cut-off tool which cuts the strip into discreet fasteners each having a projecting pilot portion and flange portions on opposed sides of the pilot portion. One problem with this method of forming self-attaching fasteners, particularly in mass production applications, is that the bore may not be accurately centered in the pilot portion because the exact position of the strip is difficult to control. At present, the strip is positioned opposite the punch by moving the strip until it contacts a stop. However, the strip may not fully engage the stop or bounce off the stop. This is a particular problem in mass production applications because only two bores are punched at a time and therefore the strip must be repeatedly located opposite the punches. As will be understood, the bore of a nut must be accurately located in the pilot for proper function.

There are several problems associated with the present method of forming a preoriented fastener strip as disclosed in the above referenced U.S. Patent No. 3,711,931, and the feeder system described above. The method of installing a self-attaching fastener of the type described above is disclosed in U.S. Patent No. 3,648,747 assigned to the predecessor-in-interest of the assignee of this application. First, location of the wires on the rear bearing face of the pierce or clinch nut reduces the bearing area for the punch which installs the fastener in a panel. During installation of a fastener strip of the type described in the above referenced U.S. Patent No. 3,711,931, the reciprocating punch of the installation head engages and drives the rear face of the fastener into the panel or panel opening. It would therefore be desirable to eliminate the wire grooves and wires from the rear face of the fastener to increase the bearing area. It should also be understood that following installation of the pierce or clinch nut to a panel, a second panel, such as a bracket or other component, is secured to the panel which receives the self-attaching fastener. It would thus be desirable to increase the bearing area of the self-attaching fastener by eliminating the wire grooves.

Another problem associated with forming a preoriented strip of fasteners as disclosed in the above referenced patent is that the frangible wires interconnecting the self-attaching fasteners may be pulled out of the wire grooves during installation of the fastener in a panel, creating a sharp wire end on the rear surface of the fastener. Further, the adjacent surfaces of the fasteners in the preoriented strip are spaced a predetermined distance for installation. Thus, when the frangible wires are severed during the installation process, these sharp wire ends protrude from the wire grooves adjacent the rear bearing surface of the fastener following installation which also creates a potential handling hazard. Another problem with the method of attaching the self-attaching fasteners in a preoriented fastener strip as disclosed in the above referenced patent is movement of the nuts on the wires prior to and during feeding of the nuts to the installation head which may cause misfeeding. Finally, another problem with the present method of feeding self-attaching nuts to an installation head is damage to the thread cylinder of the threaded bore through the pilot portion. As set forth above, self-attaching fasteners are normally fed to the installation head by a feed pawl having a finger received in the threaded bore. The feed pawl may damage the thread cylinder.

U.S. Patent No. 5,549,430 A is directed to a self-attaching fastener with a central cylindrical pilot portion, an annular flange portion surrounding the pilot portion, having a generally flat annular panel supporting end face and an annular groove defined in the flange end face surrounding the pilot.

U.S. Patent No. 4,610,072 A describes a fastener with a body portion and an annular barrel portion. During installation, the free end of the barrel portion is deformed into a U-shaped channel portion and the panel portion is deformed within the barrel portion channel.

U.S. Patent No. 6,122,816 A is directed to a method of attaching a fastening element to a panel. The fastening element includes a tubular riveting portion, a radial flange portion and a fastening portion. When attaching the fastening element to a panel, the tubular riveting portion is deformed into a hook-shape.

U.S. Patent No. 4,971,499 A shows a flush mountable pierce nut including a rectangular pilot portion, flange portions on opposed sides of the pilot portion and parallel re-entrant grooves defined in the flange portions on opposed sides of the pilot portion.

### SUMMARY OF THE INVENTION

The above-mentioned problems are solved by the self-attaching fastener according to claim 1.

The preoriented strip of self-attaching fasteners of this invention for attachment to a panel, method of forming self-attaching fasteners, method of forming a strip of self-attaching fasteners and method of feeding a strip of fasteners to an installation head of this invention solve the above problems associated with the prior art without additional expense. As set forth above, the self-attaching fasteners of this invention preferably includes a projecting pilot portion adapted to be received through an opening in a panel, and a flange portion adjacent the pilot portion having a panel receiving or bearing surface. In the continuous preoriented strip of self-attaching fasteners of this invention, however, the wire groove is formed in the panel receiving surface adjacent the pilot portion, such that upon installation of the fastener to a panel, the panel overlies the wire groove and the wire. This method of installation thus eliminates the problems associated with sharp wire ends or tangs because the wire ends are completely covered by the panel following installation. The preferred method of forming a preoriented strip of self-attaching fasteners of this invention thus includes forming a wire groove in the panel receiving surface of the flange portion of the self-attaching fastener and inserting a continuous frangible wire in the wire groove, interconnecting the fasteners in a continuous preoriented strip. The preferred embodiments of self-attaching fasteners, as described above, include a flange portion on opposed sides of the projecting pilot portion. In such embodiments, the fastener strip preferably includes a wire groove in the panel receiving surface on opposed sides of the pilot portion and parallel continuous frangible wires are received in the wire grooves and secured to the fasteners. The method further includes preorienting or aligning the fasteners, such that the wire grooves are coaxially aligned and the continuous frangible wires are preferably installed in the grooves by rolling.

The self-attaching fasteners of this invention and method of forming same may be used with various embodiments of fasteners, including both the Universal™ fastener systems and the Hi-Stress™ fastener systems described above and other self-attaching fastener systems. In the Hi-Stress™ fastener system, the method includes first forming a panel receiving groove in the flange portions adjacent the pilot portion, preferably on both sides of the pilot portion. The method then includes forming a wire groove in the lower surface or bottom wall of the panel receiving groove, preferably both grooves, and then inserting a continuous frangible wire in the wire grooves through the panel receiving grooves and securing the wires to the fasteners.

In the most preferred embodiment of this invention, the bottom wall of the wire groove or grooves includes a plurality of spaced pockets. As used herein, the term "pockets" may include either depressions or upstanding ribs, defining pockets therebetween. The continuous frangible wire is then deformed against the bottom wall of the wire groove, filling the pockets, and preventing movement of the fasteners on the wires.

The method of feeding a preoriented strip of fasteners to an installation head and preoriented fastener strip of this invention also eliminates damage to the thread cylinder. The method of forming a preoriented strip of fasteners of this invention includes forming a plurality of discreet self-attaching fasteners, preferably of the type described above, wherein each of the fasteners includes a projecting pilot portion, a flange portion on opposed sides of the pilot portion having a panel receiving surface adjacent the pilot portion and side surfaces. The method then includes forming a plurality of preferably equally spaced abutment surfaces on at least one of the sides of each of the fasteners, orienting the fasteners in end to end relation, preferably in nearly abutting relation, and then interconnecting the fasteners by a frangible connector element forming a preoriented strip of fasteners having abutment surfaces on at least one side of the preoriented fastener strip. The preoriented fastener strip is then fed to an installation head by receiving a driving member seriatim in the spaced abutment surfaces and moving the driving member to drive the strip of preoriented fasteners to the installation head. In the preferred embodiment, the abutment surfaces are equally spaced notches or grooves in the side wall of the fasteners. This method thus eliminates contact of the driving member with the bore of the fasteners.

Another advantage of the method of forming and feeding a preoriented strip of fasteners of this invention is that the abutment surfaces may be formed in the rolled metal strip from which the fasteners are formed and used to accurately locate the nut bore in the fasteners formed from the strip. This method includes forming a continuous metal strip having the cross-section of the self-attaching fasteners to be formed including a continuous central projecting pilot portion and flange portions on opposed sides of the pilot portion, wherein the flange portions include a bearing face spaced below the end face of the pilot portion and side faces. The method of forming self-attaching female fasteners of this invention then includes forming a plurality of equally spaced notches in at least one side face of the continuous strip, locating the continuous strip opposite a cylindrical punch by receiving a locating member in one of the notches and moving the punch to punch a cylindrical bore in the strip, then moving the strip to successively receive the locating member in a second notch in the strip opposite the punch to punch a plurality of equally spaced cylindrical bores in the strip and finally locating the strip opposite a cut-off tool by receiving a locating member in a notch in the strip and then moving the cut-off tool to at least partially sever the self-attaching female fasteners from the strip, preferably completely severing the strip to form discreet fasteners. This method assures that the nut bore is accurately located through the pilot portion of each nut, eliminating a problem with the present method of forming self-attaching female fasteners. In the preferred method, the fasteners are completely severed from the strip and the fasteners are then interconnected by frangible connectors as described above.

In the preferred embodiments of the method of forming self-attaching fasteners or a preoriented strip of fasteners and method of feeding a preoriented strip of fasteners of this invention, the abutment surfaces are defined by substantially equally spaced notches or grooves in the side wall of the continuous metal strip from which the fasteners are formed or the preoriented strip which is fed to the installation head, the method includes receiving a drive member seriatim in the spaced notches and moving the drive member to drive the strip, thus eliminating contact between the drive member and the thread cylinder of the fasteners. In one embodiment, each of the fasteners in the strip includes a plurality of equally spaced grooves or notches. In another embodiment, the notches are formed between adjacent fasteners by chamfering the adjacent ends of the fasteners. In one embodiment, the drive member is a rotatable wheel having a plurality of radial spokes which are received in the notches in the fastener strip, such that rotating the drive member drives the fastener strip. In another embodiment, the drive member is a pawl having a finger configured to be received in the notches and the pawl is reciprocated to drive the fasteners or the fastener strip. As will be understood, however, the abutment surfaces can also be defined by protuberances or projections extending from the side walls of the nut strip.

Other advantages and meritorious features of the present invention will be more fully understood from the following description of the preferred embodiments, the appended claims and the drawings, a brief description of which follows.

### BRIEF DESCRIPTION OF THE DRAWINGS

Figure 1 is a side elevation of a related embodiment of a self-attaching fastener;

Figure 2 is a side cross-sectional view of Figure 1 in the direction of view arrows 2-2;

Figure 3 is an end cross-sectional view of Figure 2 in the direction of view arrows 3-3;

Figure 4 is a side view illustrating the method of attaching frangible wires in the self-attaching fastener illustrated in Figures 1 to 3;

Figure 5 is a partial side view of the self-attaching fastener illustrated in the previous figures with a frangible wire located in the wire groove;

Figure 6 is a partial end cross-sectional view of Figure 5 in the direction of view arrows 6-6;

Figure 7 is a partial side cross-sectional view similar to Figure 5 with the wire located below the bottom surface of the panel groove;

Figure 8 is a side cross-sectional view of the self-attaching fastener as shown in the previous figures following installation of the fastener in a panel;

Figure 9 is a top cross-sectional view of the self-attaching fasteners described above in a preoriented strip;

Figure 10 is an elevation of the preoriented fastener strip of Figure 9 and one preferred embodiment of a feed apparatus;

Figure 11 is an enlarged partial side cross-sectional view of Figure 8 illustrating a preferred embodiment of the installation of the panel in the panel groove;

Figure 12 is a bottom view of an alternative embodiment of the preoriented fastener strip;

Figure 13 illustrates a feed mechanism for the fastener strip of Figure 12;

Figure 14 is a top elevation of an embodiment of a self-attaching fastener of this invention;

Figure 15 is a cross-sectional view of the fastener illustrated in Figure 14 with frangible wires in the wire grooves;

Figure 16 is a side cross-sectional view of a panel installation of the fastener illustrated in Figures 14 and 15;

### DETAILED DESCRIPTION OF A PREFERRED EMBODIMENT

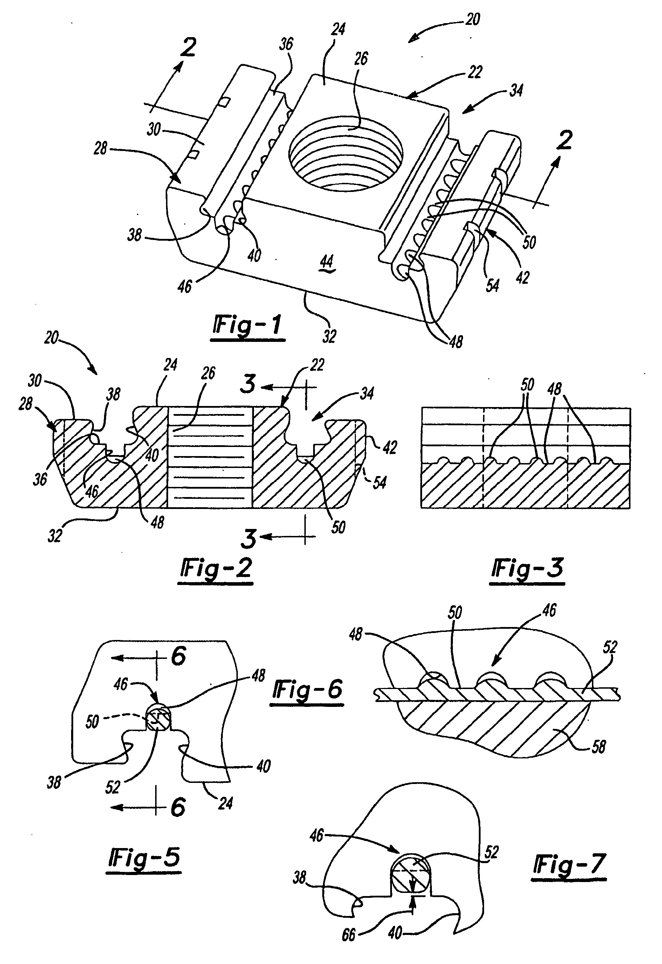

As set forth above, the present invention relates to fastener systems, particularly but not exclusively self-attaching fastener systems, including preoriented self-clinching and self-piercing and clinching nuts suitable for mass production applications, wherein the fastener is permanently installed in a metal panel. Figures 1 to 3 illustrate a related embodiment of a self-attaching fastener 20. The self-attaching fastener 20 illustrated in Figures 1 to 3 may be rolled from steel bar stock as described in the above-referenced U.S. Patent No. 3,711,931, the disclosure of which is incorporated herein by reference. Further, as described above, the self-attaching fastener illustrated in Figures 1 to 3 may be used either as a self-clinching fastener, wherein the panel to which it is attached includes an opening configured to receive the central pilot portion 22 or a piercing and clinching fastener, wherein the top face or piercing face 24 of the pilot portion pierces an opening in the panel and the fastener 20 is then clinched to the panel as described further below and in the above-referenced U.S. Patent No. 3,648,747.

In the disclosed embodiment, the pilot portion- 22 includes a bore 26 extending perpendicular to the top face 24 which may be threaded as shown. Alternatively, the bore 26 may be smooth and a thread forming or thread rolling male fastener element (not shown) may be threaded into the bore 26 to attach a second element to the fastener and panel assembly. A self-attaching fastener of the type disclosed herein generally also includes flange portions 28 on opposed sides of the central pilot portion 22 which receive and support the panel following installation.

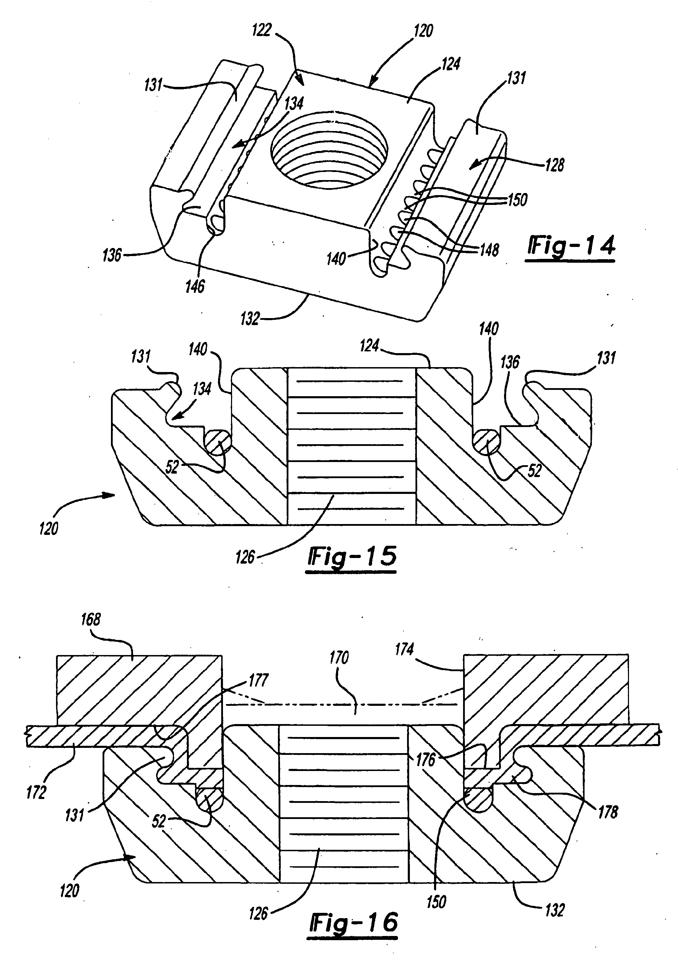

In the disclosed embodiment of the self-attaching fastener 20, the fastener includes parallel panel receiving grooves 34 which extend into the bearing faces 30 of the flange portions 28 as best shown in Figures 1 and 2. Alternatively, as described in the above-referenced U.S. Patent No. 3,711,931, the panel receiving grooves may be defined in the side faces of the pilot portion. In the disclosed embodiment, the panel receiving grooves include a bottom wall or surface 36 and inclined side walls 38 and 40 defining re-entrant dovetail-shaped grooves having a smaller opening adjacent the bearing faces 30 than at the bottom wall 36 improving the push-off force required to remove the fastener from the panel following installation. Alternatively, the inner wall 40 may extend perpendicular to the end face 24 of the pilot portion as disclosed below in regard to Figures 14 to 16. The fastener further includes side walls 42 which may be tapered from the bottom bearing face 32, as shown, to reduce the volume of metal required for forming the fastener. The end faces 44 of the fastener are generally perpendicular to the piercing face 24 because the end faces 44 are formed by cutting or chopping a rolled section as disclosed in the above-referenced U.S. Patent No. 3,711,931 and shown in Figures 21 and 22.

As described above in the Background of the Invention and shown in the above-referenced U.S. Patent No. 3,711,931, self-attaching fasteners are presently interconnected in a preoriented fastener strip for installation by an installation apparatus or head by forming wire receiving grooves in the bottom bearing surface 32 and the fasteners are interconnected by frangible metal wires which are rolled into the wire grooves and staked. This method of interconnecting self-attaching fasteners creates several problems as described above, including sharp wire tangs extending from the bearing face 32 following installation, reduced bearing area during installation and movement of the fasteners on the wires during coiling and feeding of the fastener strip. Another problem associated with feeding a fastener strip of this type is that the finger of the feed pawl is received in the bore 26 which may damage the thread cylinder whether the bore 26 is threaded or not. These problems associated with self-attaching fastener systems are solved by the embodiments of the fastener system and methods of this invention as now described below.

In the disclosed embodiments of the self-attaching fastener, the wire grooves 46 extend into the bearing face 36 of the flange portion 28. Where the self-attaching fastener 20 includes panel receiving grooves 34 as shown, the wire grooves 46 are preferably formed in the bottom wall or surface 36 of the panel receiving grooves. Alternatively, where the panel receiving groove is defined in the side walls of the central pilot portion 22 as disclosed in the above-referenced U.S. Patent No. 3,711,931, the wire receiving grooves may be formed directly in the panel supporting surfaces or bearing faces 30 of the flange portions 28 of the fastener. In the preferred embodiments, the lower surfaces of the wire grooves 46 include a plurality of spaced pockets 48 spaced by upstanding ribs 50. Stated another way, the bottom surface of the wire receiving grooves have a plurality of upstanding ribs 50 as best shown in Figure 3. As described below, the ribs or pockets prevent movement of the self-attaching fasteners on the wires 52 as described below. Further, in the preferred embodiments of the preoriented strip of self-attaching fasteners, the fastener strip includes a plurality of generally equally spaced grooves or notches for feeding the fastener strip, such as the notches 54 in the side walls of the fastener shown in Figures 1 and 2. As set forth further below, the terms "wire" or "wires" are not limited to a metal wire. Further, as described further below, a preoriented strip of self-attaching fasteners may also be formed by partially severing the pilot portion from the strip leaving frangible connector portions between the nuts in the strip.

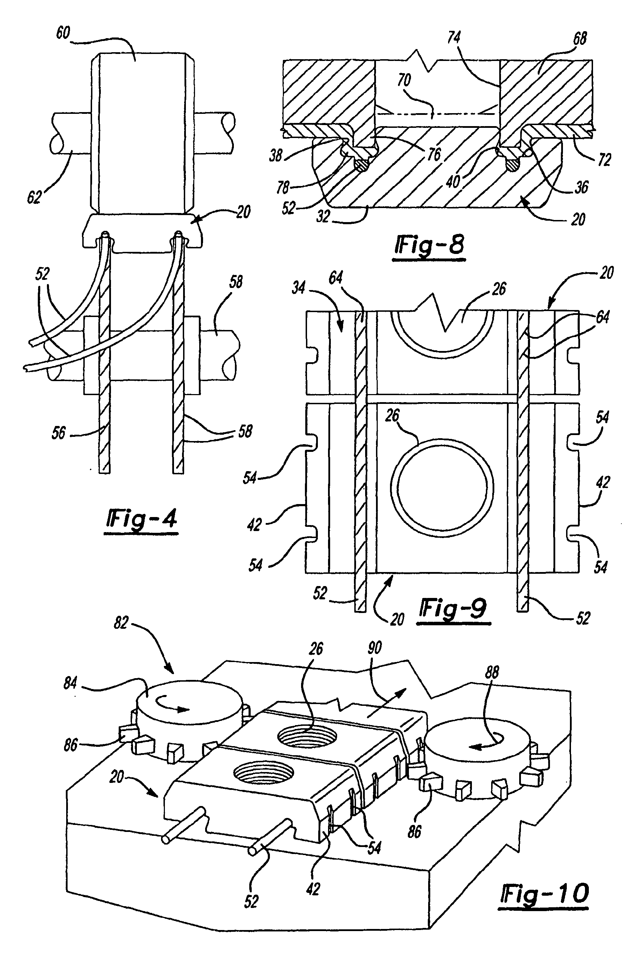

In the disclosed embodiment, the frangible wires interconnecting the self-attaching fasteners 20 are secured to the fasteners by knurling rollers 56 shown in Figure 4. The knurling rollers 56 are mounted on a suitable shaft 58 and the knurling rollers include a plurality of radially spaced splines 59. The knurling rolls 56 preferably have a width equal to or smaller than the opening of the panel receiving groove 34, but preferably wider than the width of the wire receiving grooves 46. As shown schematically in Figure 4, the self-attaching fasteners 20 are driven into engagement with the knurling rollers 56 by a roller 60 mounted on shaft 62. As shown in Figures 4, 5, 6 and 9, the knurling rollers 58 deform the wire into the pockets 48 in the lower surface of the wire receiving grooves 34, preventing movement of the fasteners 20 on the wires 52 following installation. The splined knurling rollers 58 further deform the bottom wall 36 of the panel receiving grooves 34, securing the wires 52 in the wire grooves 46 as shown by splined grooves 64 in Figure 9. Alternatively, the rollers 58 with or without splines, may have a width generally equal to or slightly smaller than the width of the opening of the wire receiving grooves 46 to deform the wires 52 into the pockets 48 and below the surface of the bottom wall or surface 36 of the panel receiving grooves as shown by dimensional arrows 66 in Figure 7. The panel 72 may then be partially deformed into the wire receiving grooves during installation of the fastener 20 to a panel as shown in Figure 8.

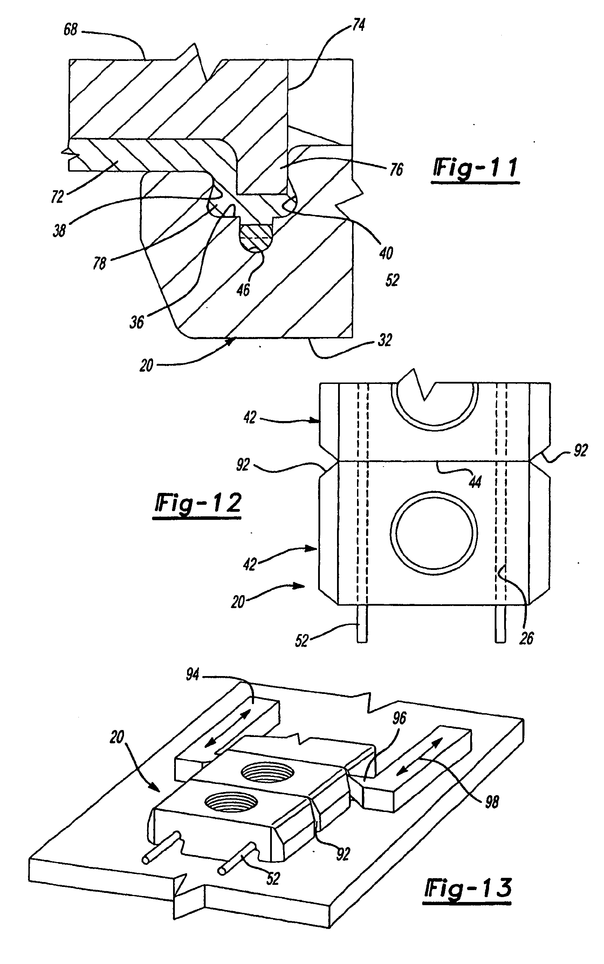

As described in the above-referenced U.S. Patent No. 3,648,747, self-attaching fasteners are normally installed in a panel by a die button 68 as shown in Figure 8. The preoriented strip of self-attaching fasteners 20 is received in an installation head (not shown) having a reciprocating plunger which is driven against the rear bearing surface 32, fracturing the frangible connector elements and driving the fastener 20 against the panel 72 which is supported on a die button 68. Where the self-attaching fastener is used as a pierce nut, the piercing surface 24 simultaneously pierces a slug 70 from the panel 72 and clinches the panel to the fastener as shown in Figure 8. The die button 68 includes a rectangular opening 74 which receives the panel slug 70 and parallel clinching lips 76 deform the panel portion 78 adjacent the pierced opening into the panel receiving grooves 34 and against the bottom wall 36. The deformation of the panel against the bottom wall 36 deforms the panel portion 78 beneath the inclined inner and outer side walls 38 and 40 of the panel receiving groove forming a very secure installation as shown in Figure 8. Where the surface of the wires 52 are deformed below the bottom wall or surface 36 of the panel receiving grooves 34, as shown in Figure 7, the panel portion 78 is also deformed into the wire grooves as shown in Figure 11.

As will be understood by those skilled in this art, the wires 52 may be formed of various materials as disclosed in the above-referenced U.S. Patent No. 3,711,931. The retaining wires 52 are preferably formed from a flexible material permitting the preoriented strip of fasteners to be rolled into a coil, but may be cut during installation of the fastener by the plunger of the installation head (not shown). Thus, the wires are preferably flexible, but frangible. A suitable material for the wires is annealed 1008 low carbon steel, which is not heat treated. This material provides more ductility and flexibility than music wire, for example, and does not dull the plunger as would music wire. Other suitable materials include monofilament nylon cord and cable and other suitable metals and polymers.

As set forth above, the preoriented fastener strip disclosed in the above-referenced U.S. Patent No. 3,711,931 are conventionally fed to the installation head (not shown) by a reciprocating pawl having a finger received in the thread cylinder 26. This method of feeding the strip of self-attaching fasteners may damage the thread cylinder 26, particularly where movement of the strip of fasteners is impeded to the installation head. As will be understood, damage to the thread cylinder may prevent use of the nut following installation. This problem has been solved in a preferred embodiment of this invention by providing grooves or notches in the side wall of the fastener strip either between adjacent fasteners or in the side wall of each nut as shown by notches 54 in Figures 1, 2, 9 and 10. As shown in Figure 10, the strip of self-attaching fasteners may then be fed to the installation head (not shown) by feeders 82 shown in Figure 10. In this embodiment, the feeders 82 include a rotatable member, wheel or ratchet 84 having a plurality of spaced radial spokes or splines 86 which are received in the grooves or notches 54 in the side walls 42 of the self-attaching fasteners 20. In the preferred embodiment, the spokes 86 are wedge-shaped to guide the spokes 86 into the notches 54. Thus, rotation of the rotatable members 84 in the direction of arrows 88 causes the preoriented strip of fasteners 20 to move in the direction of arrow 90. This feed mechanism and method of feeding the strip of fasteners thus eliminates any contact of the feeder with the thread cylinder 26.

Figures 12 and 13 illustrate an alternative feed mechanism and method of feeding a strip of fasteners, wherein the fasteners each include a chamfer 92 in the side walls adjacent in the end walls 44. The chamfers 92 create notches between the adjacent fasteners 20 as shown in Figures 12 and 13. The strip of preoriented fasteners may then be fed to the installation head by rotatable elements 82 shown in Figure 10 or by reciprocating pawls 94 shown in Figure 13. The reciprocating pawls 94 each include a wedge-shaped figure 96 which is received in the notches between the nuts defined by the chamfers 92. Upon reciprocation of the pawls 94 as shown by arrow 98, the nut strip is fed linearly. As will be understood by those skilled in this art, the pawl is rotated following each reciprocal movement to release the finger 96 from the notches. The feed pawls 94 may be spring biased (not shown) toward engagement with the notches or chamfered surfaces 92. The reciprocal movement may be provided by actuation of the installation head as disclosed in the prior art.

Figures 14 to 16 illustrate an embodiment of the self-attaching fastener system of this invention. The self-attaching fastener 120 shown in Figure 14 includes a central pilot portion 122 having a top face 124 which serves as a piercing face when the fastener is used as a self-piercing fastener. The fastener includes flange portions 128 on opposed sides of the central pilot portion 122; however, in this embodiment the flange portions 128 also include an upstanding inclined deformable lip portion 131 which partially overlies the bottom wall 136 of the panel receiving grooves 134. Further, the inner wall 140 of the panel receiving grooves extend generally perpendicular to the end face 124 of the pilot portion and the wire receiving grooves 146 are adjacent the pilot portion 122, rather than generally centered in the bottom wall 136. The lower surface of the panel receiving grooves 146 include a plurality of spaced pockets 148 separated by ribs 150 as described above. The remaining features of the self-attaching fastener 120 may be identical to the fastener 20 described above and are therefore numbered in the same sequence. Thus, no further description of the fastener 120 is required.

Figure 15 illustrates the fastener 120 following receipt of the frangible wires 52 which may be installed in the wire grooves 146 by the method and apparatus described above in regard to Figure 4. Figure 16 illustrates one method of installing the fastener system illustrated in Figures 14 and 15. As described above in regard to Figure 8, a self-attaching fastener is conventionally attached to a panel 172 by a die member or die button 168. The die member 168 includes a central opening 174 which receives the panel slug 170 when the self-attaching fastener 120 is utilized as a self-piercing and clinching fastener. Alternatively, the panel includes a pre-pierced or pre-formed opening configured to receive the pilot portion 122. The die member includes projecting parallel lips 176 which deform the panel portion 178 adjacent the opening in the panel which receives the projecting pilot portion 122 and assists in piercing the panel when the self-attaching fastener 120 is used as a self-piercing fastener. In this embodiment, however, the end face 177 of the die member also deforms the upstanding lips 131 over the panel receiving groove 134, trapping the panel portion 178 in the grooves and providing a secure installation as shown in Figure 16. In this embodiment, the inner walls 140 of the panel receiving grooves 134 may also be inclined outwardly (not shown) if desired to increase the push-off strength of the fastener and panel assembly.

A further alternative embodiment of a self-attaching fastener similar to the embodiment of a self-attaching fastener having a central pilot portion including a top face , a threaded bore and flange portions on opposed sides of the central pilot portion . The pilot portion also includes a threaded bore extending perpendicular to the top face and the outer surface of the pilot portion tapers outwardly to increase the columnar strength of the pilot portion during piercing.

In this embodiment, the inner side wall of the wire grooves is continuous with the outer side wall of the pilot portion and inclined outwardly as shown. The outer side wall of the panel receiving groove is inclined inwardly to define a restricted opening at the bearing faces , defining a restricted or re-entrant groove as described above. In this embodiment, the wire grooves are generally tear-shaped having a lip portion partially overlying the bottom surface of the wire grooves improving retention of the wires (not shown) in the wire grooves. During installation of the wire in the wire grooves , the lip portion is deformed over the wires improving the retention. The wire grooves also include a plurality of spaced pockets , as described above, preventing movement of the fasteners on the wires.

A preferred method of forming self-attaching fasteners of the types is described above which utilizes the notches to improve the quality of the self-attaching fasteners formed. As described above, the cross-section of the self-attaching nut fasteners described above is generally formed in a rolling mill starting with a round metal wire (not shown), which is then rolled in a series of rolling operations to the desired cross-section of the nut. The rolled section or strip is received from the rolling mill by the nut manufacturer in a coil . As described above, the cross-section of the strip conforms to the desired shape of the self-attaching fasteners and thus the strip includes a continuous central pilot portion , flange portions preferably on opposed sides of the pilot portion and the flange portions include side walls and panel receiving grooves as described above. In the prior method of forming self-attaching fasteners of the applicant, the fastener strip is received directly in a piercing or punching station, wherein the nut bores are first formed in the strip and the section is then cut off. The nut bores may then be threaded in a separate tapping station.

In the preferred embodiment of forming self-attaching fasteners of this invention, the fastener strip is first received in a notching or nipping station. The notching station includes an upper die and an opposed lower die, wherein the upper die includes a pair or a plurality of nipping or notching tools and the upper die is conventionally supported on die posts . As understood, the die press of the notching station may be a conventional hydraulic or pneumatic press. Thus, upon closing of the die press, the notching tools cut equally spaced notches in the side walls of the strip which are then utilized in the method of this invention to accurately locate the strip in the subsequent punching or piercing and cut-off operations described below. The configuration of the notching tools will depend upon the desired shape of the notches . As described above, the notches are preferably U-shaped as described above and shown in Figures 1, 9 and 10 or V-shaped as shown in Figures 12 and 13.

The strip having equally spaced notches is then transferred to a punching station , which includes an upper die member or platen , a lower die platen and a punch or punches attached to the upper die platen . In the method of forming self-attaching fasteners of this invention, the nut strip is transferred to and accurately located in the punching station by rotatable members or wheels supported on drive shafts or posts. The rotatable members each include a plurality of equally spaced teeth or splines which are received in the notches in the side walls of the strip. As will be understood, the rotatable members are driven on shafts to both transfer to and accurately locate the strip in the punching station . Upon lowering of the upper die , the punches punch a slug from the strip and the slugs are then received through appropriate openings in the lower die platen . The punches punch or pierce cylindrical openings or bores in the strip. In the preferred embodiment, the punch is driven through the planar end face of the pilot portion forming a chamfer at the bearing face of the section opposite the pilot portion .

The nut strip is next received in the cut-off station. The cut-off station includes an upper die member 370 and a lower die member , wherein the cut-off blades are attached to the upper die member and the lower die member includes openings which receive the cut-off blades . The fastener strip is fed through and accurately located in the cut-off station by rotating members , which may be the same rotating members or separate indexing and locating members depending upon whether the punching station is in line with the cut-off station . As described above, the rotating members are supported on drive shafts , each including a plurality of teeth or splines which are received in the notches in the side walls of the strip. Upon closing of the die, the cut-off blades sever the strip into discreet self-attaching fasteners. That is, each of the fasteners include a central pilot portion , flange portions on opposed sides of the pilot portion , a panel receiving groove in the flange portions and side walls each having equally spaced notches or grooves . In the preferred embodiment, the cut-off station is in line with and receives the strip directly from the punching station . The rotating members leading to the punching station and the rotating members leading to the cut-off station are either the same rotating members or are indexed together to control the movement and location of the strip . As will now be understood, however, the indexing and location of the fastener strip in the punching station and the cut-off station assures that the bore of the self-attaching fasteners is accurately located in the pilot portion between the end walls , thereby eliminating the problem associated with the present method of forming self-attaching fasteners described above.

As will now be understood from the above description of the preferred embodiments, various modifications may be made to the self-attaching fasteners, the preoriented fastener strips, method of forming a continuous preoriented strip of fasteners and methods of feeding a preoriented strip of fasteners of this invention. The fasteners may be spaced on the frangible wire connectors as shown in Figure 9 or the end faces of the fasteners may substantially abut as shown in Figure 12. The feed mechanisms for a strip of fasteners shown in Figures 10 and 13, are considered illustrative only to illustrate feed mechanisms which may be utilized with a fastener strip, wherein the fasteners or the fastener strip include spaced notches or grooves which are utilized to feed and accurately locate the fastener strip without contacting of the thread cylinder. Further, the fastener system of this invention may be utilized with self-attaching fasteners which do not include a panel receiving groove as disclosed in the above-referenced U.S. Patent No. 3,711,931, wherein the wire grooves would be formed in the bearing surface of the flange portions adjacent the pilot. As will be understood by those skilled in this art, the apparatus disclosed schematically are available commercially and thus a detailed description of these apparatus is not required. However, various modifications may be made to the method of forming self-attaching fasteners within the purview of the appended claims. For example, the notches may be V-shaped as shown in Figures 12 and 13, wherein the cut-off blades are then aligned with the apex of the V-shaped notches or grooves forming the self-attaching fasteners shown in Figures 12 and 13. Further, the methods of this invention may be used to form an integral strip of fasteners wherein only the pilot portion is severed from the strip providing frangible connector portions on opposed sides of the strip. Further, as set forth above, the preferred embodiments of the self-attaching fasteners include equally spaced notches or grooves in at least one of the side walls of the fasteners as described above. However, protrusions can also be formed in the side walls in the rolling process, for example, which provide abutment surfaces for forming self-attaching fasteners and feeding a strip of fasteners as described above.

Another embodiment relates to a preoriented strip of self-attaching fasteners for attachment to a panel, each of said fasteners including a projecting pilot portion adapted to be received through an opening in a panel, a flange portion adjacent said pilot portion having a panel receiving surface, a substantially continuous wire groove in said panel receiving surface, and a frangible continuous wire in said wire groove interconnecting said fasteners in a continuous preoriented strip.

Preferably, each of said fasteners include two flange portions on opposed sides of said projecting pilot portion each having a panel receiving surface, a wire receiving groove in each panel receiving surface, and a continuous frangible wire in each wire receiving groove on opposed sides of said projecting pilot portion interconnecting said fasteners.

Preferably, each of said fasteners includes a panel receiving groove in said panel receiving surface of said flange portion adjacent said pilot portion having a bottom wall and said wire groove located in bottom wall of said panel receiving groove.

Preferably, said wire receiving groove is adjacent said pilot portion.

Preferably, said wire receiving groove includes a bottom wall and said bottom wall of said wire-receiving groove includes a plurality of spaced pockets.

Preferably, said wire is deformed into said plurality of spaced pockets in said wire groove bottom wall preventing said fasteners from moving on said wire.

Preferably, said wire is located below said panel receiving surface.

Another embodiment relates to a fastener and panel assembly, comprising:
a fastener including a projecting pilot portion, a flange portion adjacent said pilot portion having a panel receiving surface, a substantially continuous wire groove in said panel receiving surface and a frangible wire in said wire groove; and
a panel having an opening therein receiving said projecting pilot portion of said fastener and said panel having a portion overlying and contacting said panel receiving surface and overlying said wire.

Preferably, said frangible wire is spaced below said panel receiving surface and said portion of said panel is deformed into said wire groove.

Preferably, each of said fasteners includes a panel receiving groove in said panel receiving surface of said flange portion having a bottom wall, said wire groove located in said bottom wall of said panel receiving groove and said panel portion adjacent said pilot portion of said fastener deformed into said panel receiving groove overlying said bottom wall of said panel receiving groove and said frangible wire.

Preferably, said wire receiving groove is adjacent said pilot portion.

Preferably, said wire receiving groove includes a bottom surface and said bottom surface of said wire receiving groove includes a plurality of spaced pockets.

Preferably, said wire is deformed into said plurality of spaced pockets in said bottom surface of said wire receiving groove preventing said fasteners from moving on said wire.

Another embodiment relates to a method of forming a continuous strip of self-attaching fasteners, comprising the following steps:
forming a plurality of discrete self-attaching fasteners, each fastener including a projecting pilot portion and a flange portion having a panel receiving surface adjacent said projecting pilot portion;
forming a substantially continuous wire groove in said panel receiving surface of each of said self-attaching fasteners;
aligning said discrete self-attaching fasteners with said wire grooves substantially coaxially aligned; and
inserting a continuous frangible wire in said wire grooves of said discrete self-attaching fasteners and securing said wire to said fasteners forming a continuous strip of self-attaching fasteners.

Preferably, said method includes forming a panel receiving groove in said panel receiving surface adjacent said pilot portion having a bottom surface in each of said fasteners, forming said wire groove in said bottom surface of said panel receiving groove, and inserting said continuous frangible wire into said wire groove through said panel receiving groove.

Preferably, said method includes forming a plurality of spaced pockets in a bottom surface of said wire retaining groove of each of said fasteners and deforming said continuous frangible wire against said bottom surface and into said plurality of spaced pockets, thereby preventing said fasteners from moving on said wire.

Preferably, said method includes deforming said continuous frangible wire against a bottom surface of said wire retaining groove with said wire spaced below said panel receiving surface.

Another embodiment relates to a method of feeding a preoriented strip of self-attaching fasteners to an installation head, said method comprising the following steps:
forming a continuous strip of self-attaching fasteners interconnected by frangible connectors, each fastener having a bore and a sidewall extending generally perpendicular to said bore;
forming a plurality of substantially equally spaced abutment surfaces in at least one side of said side walls of said preoriented strip of self-attaching fasteners and
receiving a driving member seriatim against at least one of said abutment surfaces and moving said driving member to drive said strip of self-attaching fasteners to an installation head.

Preferably, said method includes forming notches between adjacent fasteners in said continuous strip of said self-attaching fasteners.

Preferably, said method includes forming a plurality of generally rectangular self-attaching fasteners each fastener having an end face in nearly abutting relation in said strip of self-attaching fasteners and forming a chamfered surface at said end faces of said fasteners forming said abutment surfaces.

Preferably, said method includes forming a plurality of spaced notches in said sidewalls of each of said fasteners.

Preferably, said driving member comprises a rotatable member having a plurality of spaced radial spokes, said method including forming equally spaced notches in said side wall of said strip of self-attaching fasteners including said abutment surfaces, rotating said driving member to receive said radial spokes in said plurality of substantially equally spaced notches in said continuous strip of fasteners, driving said strip of fasteners to an installation head.

Preferably, said drive member includes a reciprocal pawl having an end portion configured to be received against said abutment surfaces, and said method including receiving said end portion of said pawl against one of said abutment surfaces and moving said pawl to drive said strip of fasteners.

Another embodiment relates to a continuous strip of fasteners for attachment to a panel, comprising:
a plurality of generally rectangular fasteners, each fastener including end faces and side faces, a central projecting pilot having a bore therethrough and a flange portion on opposed sides of said pilot portion having a panel engaging surface adjacent said pilot portion, a frangible connector interconnecting said fasteners in end to end relation in a continuous strip, and a plurality of substantially equally spaced notches in said strip of fasteners at said side faces for driving said strip of fasteners to an installation head.

Preferably, said plurality of substantially equally spaced notches is defined by a chamfer in the end faces of adjacent fasteners in said continuous strip of fasteners.

Preferably, said substantially equally spaced notches comprise a plurality of spaced notches defined in said side faces of each of said fasteners.

Preferably, said panel engaging surface of each of said fasteners includes a wire groove and said frangible connector comprises a continuous frangible wire in said wire grooves interconnecting adjacent fasteners in said continuous strip of fasteners.

Preferably, each of said fasteners includes a panel receiving groove extending into said flange portions on opposed sides of said pilot portion adjacent said pilot portion and said wire grooves located in a lower surface of said panel receiving grooves.

Another embodiment relates to a method of forming self-attaching female fasteners, comprising the following steps:
forming a continuous metal strip having a cross-section of the self-attaching fasteners to be formed including a continuous pilot portion projecting from a central portion of said strip and flange portions on opposed sides of said pilot portion, said flange portions each including a bearing face spaced below and end face of said pilot portion and a side face;
forming a plurality of equally spaced notches in at least one of said side faces of said strip;
locating a first portion of said strip opposite a cylindrical punch by receiving a locating member in one of said notches, the moving said punch to pierce a cylindrical bore in said strip, advancing said strip and locating a second portion of said strip opposite said punch by receiving said locating member in a second one of said notches, thereby forming a plurality of equally spaced cylindrical bores in said strip; and
locating said strip opposite a cut-off tool by receiving a locating member in one of said notches and moving said cut-off tool to at least partially severe said strip spaced equidistant between two of said plurality of equally spaced bores, forming a self-attaching fastener.

Preferably, said method includes advancing said strip by moving said location member.

Preferably, said method includes severing said strip by moving said cut-off tool through said strip, thereby forming a plurality of discreet self-attaching fasteners, then interconnecting said self-attaching fasteners by attaching a frangible connector element extending between said self-attaching fasteners.

Preferably, said method includes forming a groove in said flange portions of said strip and locating a wire in said groove of adjacent fasteners.

Preferably, said method includes forming a plurality of equally spaced U-shaped notches in said at least one side face of said strip.

Preferably, said method includes forming said plurality of equally spaced V-shaped notches in each of said side faces of said strip.

Preferably, said method includes forming said V-shaped notches in each of said side faces of said strip, locating said strip opposite said cut-off tool with said cut-off tool aligned with said V-shaped notches and severing said strip through said V-shaped notches forming a plurality of discreet self-attaching fasteners each having a chamfered surface at the corners of said self-attaching fasteners.

Another embodiment relates to a method of forming self-attaching fasteners, comprising the following steps:
forming a continuous metal strip having a cross-section of the fasteners to be formed including a pilot portion projecting from a central portion of said strip and flange portions on opposed sides of said pilot portion, said flange portions each including a bearing surface spaced below an end face of said pilot portion and a side face;
forming a plurality of equally spaced notches in said side faces of said strip;
locating a first portion of said strip opposite a punch by receiving a locating member in one of said notches in each of said side faces of said strip, then moving said punch to pierce a first bore in said strip, advancing said strip by moving said locating member and moving said punch to form a second bore in said strip; and
locating said strip opposite a cut-off tool by receiving a locating member in one of said notches on opposed sides of said strip and moving said cut-off tool to severe said strip equidistant between two of said plurality of equally spaced bores forming discreet self-attaching fasteners.

Preferably, said method further includes forming a groove in said flange portions of said strip and interconnecting said discreet self-attaching fasteners by locating a continuous frangible connector element in said groove of adjacent fasteners.

Preferably, said method includes forming a plurality of equally spaced U-shaped notches, in said side faces of said strip.

Preferably, said method includes forming V-shaped notches in said side faces of said strip and locating said strip opposite said cut-off tool with said cut-off tool aligned with said V-shaped notches and severing said strip through said V-shaped notches forming a plurality of discreet self-attaching fasteners each having a chamfered surface at the corners of said self-attaching fasteners.

## Claims

1. A self-attaching fastener (20), comprising:
a central projecting pilot portion (22) having an end face (24), a bore extending through said pilot portion (22) through said end face (24), flange portion (28) on opposed sides of said pilot portion (22) each having a panel supporting face (30), panel receiving grooves (34) in said panel supporting faces (30) of said flange portions (28) on opposed sides of said pilot portion (22) adjacent said pilot portion (22), said panel receiving grooves (34) each including a bottom wall (36) and opposed side walls (38, 40) including an inner side wall (40) adjacent said pilot portion (22) and an outer side wall (38), at least one of said side walls (38, 40) of said panel receiving grooves (34) being inclined and overlying said bottom wall (36), **characterised in that** said outer side wall (38) includes a deformable lip (131) inclined upwardly from said panel supporting faces (30) and overlying said bottom wall (36).

2. The self-attaching fastener (20) as defined in Claim 1, wherein said bottom wall (36) of each of said panel receiving grooves (34) includes a wire retaining groove (46).

3. The self-attaching fastener (20) as defined in Claim 2, wherein said wire retaining grooves (46) include spaced pockets (48) and said wire retaining grooves (46) each including a frangible wire (52) deformed into said spaced pockets (48) in said bottom wall (36) of said wire retaining groove (46).

4. The self-attaching fastener (20) as defined in Claim 3, wherein said flange portions include spaced grooves in a side wall of said flange portions (28) extending generally perpendicular to said panel supporting faces (30).

5. A fastener and panel assembly, comprising:
at least one fastener as defined in claim 1, further comprising:
a panel receiving surface,
a substantially continuous wire groove (46) in said panel receiving surface (30) and a frangible continuous wire (52) in said wire groove (46) substantially flush with or below said panel receiving surface (30) interconnecting two of said fasteners (20) in a continuous preoriented strip; and
a panel (72, 172) having an opening therein receiving said projecting pilot portion (22) of said fastener (20) and said panel (72, 172) having a portion overlying and contacting said panel receiving surface (30) and overlying said frangible continuous wire (52).

6. The fastener and panel assembly as defined in Claim 5, wherein said frangible continuous wire (52) is spaced below said panel receiving surface (30) and said portion of said panel (72, 172) is deformed into said wire groove (46).

7. The fastener and panel assembly as defined in Claim 6, wherein each of said fasteners (20) includes a panel receiving groove (34) in said panel receiving surface of said flange portion (28) having a bottom wall (36), said wire groove (46) located in said bottom wall (36) of said panel receiving groove (34) and said panel portion adjacent said pilot portion (22) of said fastener (20) deformed into said panel receiving groove (34) overlying said bottom wall (36) of said panel receiving groove (34) and said frangible wire (52).

8. The fastener and panel assembly as defined in Claim 7, wherein said wire groove (46) is adjacent said pilot portion (22).

9. The fastener and panel assembly as defined in Claim 8, wherein said wire groove (46) includes a bottom surface and said bottom surface of said wire groove (46) includes a plurality of spaced pockets (48).

10. The fastener and panel assembly as defined in Claim 9, wherein said wire (52) is deformed into said plurality of spaced pockets (48) in said bottom surface of said wire groove (46) preventing said fasteners (20) from moving on said wire (52).

## Patentansprüche

1. Selbstbefestigendes Befestigungselement (20), bestehend aus:
einem zentral hervorstehenden Führungsteil (22) aufweisend eine Endfläche (24),
einer Bohrung sich erstreckend durch das Führungsteil (22) und durch die Endfläche (24),
Flanschteil (28) an gegenüberliegenden Seiten des Führungsteiles (22) jedes mit einer Paneel unterstützenden Fläche (30),
Paneel aufnehmende Kerben (34) in den Paneel unterstützenden Flächen (30) der Flanschteile (28) an gegenüberliegenden Seiten des Führungsteiles (22) angrenzend an das Führungsteil (22),
die Paneel aufnehmenden Kerben (34) jede beinhaltend eine untere Wandung (36) und gegenüberliegende seitliche Wandungen (38, 40) beinhaltend eine innere seitliche Wandung (40) angrenzend an das Führungsteil (22) und eine äußere seitliche Wandung (38),
mindestens eine der seitlichen Wandungen (38, 40) der Paneel aufnehmenden Kerben (34) ist geneigt und überlagert die untere Wandung (36), **gekennzeichnet dadurch, dass**
die äußere seitliche Wandung (38) eine verformbare Lippe (131) beinhaltet, die aufwärts geneigt ist von den Paneel unterstützenden Flächen (30) und die untere Wandung (36) überlagert.

2. Das selbstbefestigende Befestigungselement (20) wie definiert in Anspruch 1, wobei die untere Wandung (36) von jeder der Paneel aufnehmenden Kerben (34) eine Kabel haltende Kerbe (46) beinhaltet.

3. Das selbstbefestigende Befestigungselement (20) wie definiert in Anspruch 2, wobei die Kabel haltenden Kerben (46) beabstandete Aussparungen (48) beinhalten und die Kabel haltenden Kerben (46) jeweils ein zerteilbares Kabel (52) beinhalten, welches verformt ist in die beabstandeten Aussparungen (48) in der unteren Wandung (36) der Kabel haltenden Kerbe (46).

4. Das selbstbefestigende Befestigungselement (20) wie definiert in Anspruch 3, wobei die Flanschteile beabstandete Kerben in einer seitlichen Wandung der Flanschteile (28) beinhalten, die sich im allgemeinen senkrecht zu den Paneel unterstützenden Flächen (30) erstrecken.

5. Befestigungselement- und Paneelanordnung, bestehend aus:
mindestens einem Befestigungselement wie definiert in Anspruch 1, bestehend weiter aus:
einer Paneel aufnehmenden Oberfläche,
einer im Wesentlichen durchgängigen Kabelkerbe (46) in der Paneel aufnehmenden Oberfläche (30) und ein zerteilbares durchgängiges Kabel (52) in der Kabelkerbe (46) im Wesentlichen bündig mit oder unterhalb der Paneel aufnehmenden Oberfläche (30), welches zwei der Befestigungselemente (20) zu einem durchgängigen vororientierten Streifen verbindet; und
einem Paneel (72, 172) aufweisend eine Öffnung welche das hervorstehende Führungsteil (22) des Befestigungselementes (20) aufnimmt und wobei das Paneel (72, 172) einen Teil hat, der die Paneel aufnehmende Oberfläche (30) überlagert und berührt und das zerteilbare durchgängige Kabel (52) überlagert.

6. Die Befestigungselement- und Paneelanordnung wie definiert in Anspruch 5, wobei das zerteilbare durchgängige Kabel (52) beabstandet ist unterhalb der Paneel aufnehmenden Oberfläche (30) und der Teil des Paneels (72, 172) verformt ist hinein in die Kabelkerbe (46).

7. Die Befestigungselement- und Paneelanordnung wie definiert in Anspruch 6, wobei jedes der Befestigungselemente (20) eine Paneel aufnehmende Kerbe (34) in der Paneel aufnehmenden Oberfläche der Flanschteile (28) beinhaltet, die eine untere Wandung (36) aufweist, die Kabelkerbe (46) ist ansässig in der unteren Wandung (36) von der Paneel aufnehmenden Kerbe (34) und der Paneelteil, welcher angrenzend ist an das Führungsteil (22) des Befestigungselementes (20), ist verformt in die Paneel aufnehmende Kerbe (34) überlagernd die untere Wandung (36) von der Paneel aufnehmenden Kerbe (34) und das zerteilbare Kabel (52).

8. Die Befestigungselement- und Paneelanordnung wie definiert in Anspruch 7, wobei die Kabelkerbe (46) angrenzend ist an das Führungsteil (22).

9. Die Befestigungselement- und Paneelanordnung wie definiert in Anspruch 8, wobei die Kabelkerbe (46) eine untere Oberfläche beinhaltet und diese untere Oberfläche der Kabelkerbe (46) eine Mehrzahl von beabstandeten Aussparungen (48) beinhaltet.

10. Die Befestigungselement- und Paneelanordnung wie definiert in Anspruch 9, wobei das Kabel (52) verformt ist in die Mehrzahl von beabstandeten Aussparungen (48) in der unteren Oberfläche der Kabelkerbe (46) was verhindert, dass Befestigungselemente (20) sich auf dem Kabel (52) bewegen.

## Revendications

1. Une fixation auto-attachante (20), comprenant :
une partie pilote saillante centrale (22) ayant une face d'extrémité (24), un alésage s'étendant au travers de ladite partie pilote (22) au travers de ladite face d'extrémité (24), des parties de rebord (28) sur des côtés opposés de ladite partie pilote (22) ayant chacune une face support de panneau (30), des gorges de réception de panneau (34) dans lesdites faces support de panneau (30) desdites parties de rebord (28) sur des côtés opposés de ladite partie pilote (22) adjacentes à ladite partie pilote (22), lesdites gorges de réception de panneau (34) comprenant chacune une paroi de fond (36) et des parois latérales opposées (38, 40) incluant une paroi latérale intérieure (40) adjacente à ladite partie pilote (22) et une paroi latérale extérieure (38), au moins l'une desdites parois latérales (38, 40) desdites gorges de réception de panneau (34) étant inclinée et surplombant ladite paroi de fond (36), **caractérisée en ce que** ladite paroi latérale extérieure (38) inclut une lèvre déformable (131) inclinée vers le haut à partir desdites faces supports de panneau (30) et surplombant ladite paroi de fond (36).

2. La fixation auto-attachante (20) selon la revendication 1, dans laquelle ladite paroi de fond (36) de chacune desdites gorges de réception de panneau (34) comprend une gorge de rétention de fil (46).

3. La fixation auto-attachante (20) selon la revendication 2, dans laquelle lesdites gorges de rétention de fil (46) comprennent des alvéoles espacés (48) et lesdites gorges de rétention de fil (46) comprennent chacune un fil frangible (52) déformé jusque dans lesdits alvéoles espacés (48) dans ladite paroi de fond (36) de ladite gorge de rétention de fil (46).

4. La fixation auto-attachante (20) selon la revendication 3, dans laquelle lesdites parties de rebord comprennent des gorges espacées dans une paroi latérale desdites portions de rebord (28) s'étendant généralement perpendiculairement auxdites faces support de panneau (30).

5. Un ensemble fixation et panneau comprenant :
au moins une fixation telle que définie dans la revendication 1, comprenant en outre :
une surface de réception de panneau,
une gorge à fil substantiellement continue (46) dans ladite surface de réception de panneau (30) et un fil continu frangible (52) dans ladite gorge à fil (46) substantiellement au niveau de ladite surface de réception de panneau (30), ou au-dessous de celle-ci, interconnectant deux desdites fixations (20) en une bande préorientée continue ; et
un panneau (72, 172) ayant à l'intérieur une ouverture recevant ladite partie pilote saillante (22) de ladite fixation (20) et ledit panneau (72, 172) ayant une partie surplombant ladite surface de réception de panneau (30) et venant en contact avec celle-ci et surplombant ledit fil continu frangible (52).

6. L'ensemble fixation et panneau selon la revendication 5, dans lequel ledit fil continu frangible (52) est espacé au-dessous de ladite surface de réception de panneau (30) et ladite partie dudit panneau (72, 172) est déformée jusque dans ladite gorge à fil (46).

7. L'ensemble fixation et panneau selon la revendication 6, dans lequel chacune desdites fixations (20) comprend une gorge de réception de panneau (34) dans ladite surface de réception de panneau de ladite partie de rebord (28) ayant une paroi de fond (36), ladite gorge à fil (46) située dans ladite paroi de fond (36) de ladite gorge de réception de panneau (34) et ladite partie de panneau adjacente à ladite partie pilote (22) de ladite fixation (20) déformée jusque dans ladite gorge de réception de panneau (34) surplombant ladite paroi de fond (36) de ladite gorge de réception de panneau (34) et ledit fil frangible (52).

8. L'ensemble fixation et panneau selon la revendication 7, dans lequel ladite gorge à fil (46) est adjacente à ladite partie pilote (22).

9. L'ensemble fixation et panneau selon la revendication 8, dans lequel ladite gorge à fil (46) inclut une surface de fond et ladite surface de fond de ladite gorge à fil (46) inclut une pluralité d'alvéoles espacés (48).

10. L'ensemble fixation et panneau selon la revendication 9, dans lequel ledit fil (52) est déformé jusque dans ladite pluralité d'alvéoles espacés (48) dans ladite surface de fond de ladite gorge à fil (46) empêchant lesdites fixations (20) de se déplacer sur ledit fil (52).
